# EUROPÄISCHE PATENTANMELDUNG

(11) **EP 2 343 618 A2**
(43) Veröffentlichungstag der Anmeldung: **13.07.2011**
(21) Anmeldenummer: 10009244.4
(22) Anmeldetag: 06.09.2010
(51) Int. Cl.: G05D 1/06

(54) **Verfahren zum automatischen Landen eines Luftfahrzeuges**

(30) Priorität: 17.09.2009 DE 102009041652
(71) Anmelder: EADS Deutschland GmbH, 85521 Ottobrunn (DE)
(72) Erfinder: Hiebl, Manfred, 82054 Sauerlach (DE)

(57) **Zusammenfassung**

Ein Verfahren zum automatischen Landen eines Luftfahrzeugs (3), insbesondere eines unbemannten Luftfahrzeugs, auf einer bewegten, insbesondere schwimmenden, Landeplattform (10) wie beispielsweise auf einem Flugzeugträger (1), wobei das Luftfahrzeug mit automatischen Navigationseinrichtungen und einer automatischen Landesteuerungseinrichtung versehen ist, weist folgende Schritte auf:
a) Ermitteln der Positionsdaten eines vorgesehen Landepunktes (L) an Bord der bewegten Landeplattform;
b) Ermitteln von Bewegungsdaten einer Bewegung der Landeplattform um zumindest eine ihrer Raumachsen;
c) Bestimmung von zumindest einem bevorstehenden Zeitpunkt, an dem der Landepunkt eine Referenzlage und vorzugsweise die Landeplattform eine Referenzausrichtung einnehmen;
d) Übermittlung des im Schritt c) bestimmten Zeitpunkts sowie der Referenzlage des Landepunktes und/oder der in den Schritten a) und b) ermittelten Positions- und Bewegungsdaten und vorzugsweise auch der im Schritt c) bestimmten Referenzausrichtung an die Landesteuerungseinrichtung des Luftfahrzeugs;
e) Steuerung des Luftfahrzeugs derart, dass der von der Landesteuerungseinrichtung vorausberechnete Aufsetzort des Luftfahrzeugs auf der Landeplattform der Referenzlage des Landepunktes entspricht und dass der von der Landesteuerungseinrichtung vorausberechnete Aufsetzzeitpunkt, der dem Zeitpunkt des Erreichens des Aufsetzortes entspricht, dem im Schritt c) bestimmten Zeitpunkt entspricht.

## Beschreibung

### TECHNISCHES GEBIET

Die vorliegende Erfindung betrifft ein Verfahren zum automatischen Landen eines Luftfahrzeugs, insbesondere eines unbemannten Luftfahrzeugs auf einer bewegten, insbesondere schwimmenden, Landeplattform wie beispielsweise auf einem Flugzeugträger. Die Erfindung betrifft weiterhin eine Vorrichtung zur automatischen Steuerung der Landung eines Luftfahrzeugs auf einer bewegten Landeplattform.

### STAND DER TECHNIK

Das Landen eines Luftfahrzeugs auf einer bewegten Landeplattform, insbesondere auf einem Flugzeugträger, ist bereits mit einem bemannten, von Piloten gesteuerten Luftfahrzeug schwierig. Noch schwieriger ist es hingegen, ein unbemanntes Luftfahrzeug auf einer schwimmenden Landeplattform zu landen, die ständigen Wellenbewegungen ausgesetzt ist. Diese Wellenbewegungen können um die Querachse als so genanntes Stampfen oder um die Längsachse als so genanntes Rollen auftreten. Bei Kombination von Stampfen und Rollen kann sogar eine Bewegung um die Hochachse der schwimmenden Landeplattform auftreten.

Hinzu kommt, dass auf dem Wasser nicht zu unterschätzende Seitenwindeinflüsse die Landung von Luftfahrzeugen auf einer schwimmenden Plattform erschweren können. Besonders beim Landen von ferngesteuerten unbemannten Luftfahrzeugen sind Seitenwindeinflüsse sehr schwer auszugleichen.

Durch die beschriebenen Bewegungen der Landeplattform um ihre drei Raumachsen und gegebenenfalls entlang ihrer drei Raumachsen beschreibt die auf der Landeplattform vorgesehene Landeschwelle, die den vorgesehen Landepunkt definiert, eine ständige Bewegung um die Raumachsen und gegebenenfalls sogar entlang der Raumachsen. Diese Bewegung des Landepunktes stellt eine große Schwierigkeit für das Durchführen einer punktgenauen Landung dar, da das landende Luftfahrzeug ständig neu ausgerichtet werden muss.

Besonders bei einem Flugzeugträger, der aufgrund seiner Länge kaum Bewegungen um seine Querachse durchführt, der aber aufgrund der Höhe seines Aufbaus einer spürbaren Rollbewegung um seine Längsachse unterliegt, schwankt sowohl die Position des vorgesehen Landepunktes, als auch die Winkellage der Landebahn bezüglich der Längsachse ständig mit der Frequenz der Rollbewegung. Bei herkömmlichen Landeanflugverfahren führt dies dazu, dass durch das ständige Nachkorrigieren der Fluglage des landenden Luftfahrzeugs das Luftfahrzeug einen Schlingerkurs im Landeanflug fliegt, wodurch die Gefahr einer unpräzisen Landung oder eines Landeabbruchs oder gar einer Bruchlandung steigt.

In der Praxis wird daher zunächst versucht durch Maßnahmen an Bord des Flugzeugträgers die Rollbewegungen des Schiffes zu kompensieren. Zudem ist in der Regel auf einem Flugzeugträger in der Nähe des Landepunktes ein Landekontrolloffizier (LCO) stationiert, der Sichtkontakt zum anfliegenden Luftfahrzeug hat und der kontrolliert, ob sich das Luftfahrzeug auf dem vorgesehenen Gleitpfad befindet und der dem Piloten über Funk und durch Zeichensprache Korrektursignale für die Flugzeuglage übermittelt. Die Landung eines Luftfahrzeugs auf einer sich bewegenden Plattform, wie einem Flugzeugträger, ist somit sehr stark von den Fähigkeiten der Luftfahrzeugbesatzung und der Besatzung der sich bewegenden Plattform abhängig, sodass automatische Landungen, wie sie für unbemannte Luftfahrzeuge bevorzugt werden, bislang kaum durchführbar sind.

### DARSTELLUNG DER ERFINDUNG

Aufgabe der vorliegenden Erfindung ist es daher, ein gattungsgemäßes Verfahren zum automatischen Landen eines Luftfahrzeugs auf einer bewegten Landeplattform anzugeben, bei dem die Sicherheit beim Landen deutlich verbessert wird. Weiterhin ist eine für die Durchführung eines solchen Verfahrens geeignete Vorrichtung anzugeben.

Die das Verfahren betreffende Aufgabe wird durch das im Patentanspruch 1 angegebene Verfahren gelöst.

Bei dem erfindungsgemäßen Verfahren zum automatischen Landen eines Luftfahrzeugs, insbesondere eines unbemannten Luftfahrzeugs, auf einer bewegten, insbesondere schwimmenden, Landeplattform wie beispielsweise einem Flugzeugträger, wobei das Luftfahrzeug mit automatischen Navigationseinrichtungen und einer automatischen Landesteuerungseinrichtung versehen ist, werden die folgenden Schritte durchgeführt:
a) Ermitteln der Positionsdaten eines vorgesehen Landepunktes an Bord der bewegten Landeplattform;
b) Ermitteln von Bewegungsdaten einer Bewegung der Landeplattform um zumindest eine ihrer Raumachsen;
c) Bestimmung von zumindest einem bevorstehenden Zeitpunkt, an dem der Landepunkt eine Referenzlage und vorzugsweise die Landeplattform eine Referenzausrichtung einnehmen;
d) Übermittlung des im Schritt c) bestimmten Zeitpunkts sowie der Referenzlage des Landepunktes und/oder der in den Schritten a) und b) ermittelten Positions- und Bewegungsdaten und vorzugsweise auch der im Schritt c) bestimmten Referenzausrichtung an die Landesteuerungseinrichtung des Luftfahrzeugs;
e) Steuerung des Luftfahrzeugs derart, dass der von der Landesteuerungseinrichtung vorausberechnete Aufsetzort des Luftfahrzeugs auf der Landeplattform der Referenzlage des Landepunktes entspricht und dass der von der Landesteuerungseinrichtung vorausberechnete Aufsetzzeitpunkt, der dem Zeitpunkt des Erreichens des Aufsetzortes entspricht, dem im Schritt c) bestimmten Zeitpunkt entspricht.

### VORTEILE

Durch das Vorausberechnen des Zeitpunktes, an dem der Landepunkt eine definierte Referenzlage und vorzugsweise auch die Landeplattform eine definierte Referenzausrichtung einnehmen, können die Bewegungen der Landeplattform ignoriert werden und das Luftfahrzeug kann den Landeanflug mit einer konstanten Fluglage und auf einem im Wesentlichen geraden Gleitpfad durchführen. Die Landesteuerung des Luftfahrzeugs kennt somit einen oder mehrere in der Zukunft liegende Zeitpunkte, zu denen der Landepunkt auf der Landeplattform eine definierte Referenzlage einnehmen wird, und kennt auch die Koordinaten dieser Referenzlage(n) in einem absoluten Koordinatensystem. Die Landesteuerung kann daraufhin die Fluggeschwindigkeit über Grund und die Sinkgeschwindigkeit des Luftfahrzeugs so wählen, dass der aus der aktuellen Position des Luftfahrzeugs, der Fluggeschwindigkeit über Grund und der Sinkgeschwindigkeit sowie der Höhe der definierten Referenzlage des Landepunktes berechnete Aufsetzpunkt zum berechneten Zeitpunkt der Lage des Landepunktes im Raum entspricht.

Da vorzugsweise sowohl die Fluglage des Luftfahrzeugs, als auch die Referenzausrichtung der Landeplattform im Zeitpunkt des Zusammentreffens von Landepunkt und Aufsetzpunkt, also im Moment des "Touch-downs", im Wesentlichen übereinstimmen, ist eine sanfte Landung des Luftfahrzeugs auf der bewegten Landeplattform vorhersagbar. Dadurch wird ein Schlingerkurs des Luftfahrzeugs im Landeanflug vermieden und das Halten des Kurses des Luftfahrzeugs im Landeanflug wird deutlich erleichtert, was insbesondere für unbemannte Luftfahrzeuge von Vorteil ist.

Weitere bevorzugte und vorteilhafte Ausgestaltungsmerkmale des erfindungsgemäßen Verfahrens sind Gegenstand der Unteransprüche 2 bis 8.

Bei einer bevorzugten Weiterbildung des erfindungsgemäßen Verfahrens können die Seitenwindeinflüsse dadurch reduziert werden, dass die Längsachse der auf der bewegbaren Landeplattform vorgesehenen Landebahn vor der Landung in den Wind gedreht wird.

Vorzugsweise erfolgt diese Ausrichtung der Landeplattform kontinuierlich während des Landeanflugs des Luftfahrzeugs.

Vorzugsweise ist die Referenzlage zumindest annähernd horizontal. Dadurch kann das Aufsetzen des Luftfahrzeugs auf der Landeplattform bei einem Nulldurchgang der entsprechenden Schlingerbewegung um die Raumachse(n), insbesondere um die Rollachse, erfolgen.

Besonders wirksam ist das erfindungsgemäße Verfahren dann, wenn die Raumachse, für die im Schritt d) die Bewegungsdaten ermittelt werden, die Längsachse der bewegten Landeplattform ist. Hierdurch kann die Rollbewegung der Landeplattform für den Landeanflug neutralisiert werden.

Vorzugsweise ist die Raumachse, für die im Schritt b) die Bewegungsdaten ermittelt werden, die Querachse der bewegten Landeplattform, wodurch die Nick- oder auch Stampfbewegung der Landeplattform neutralisiert werden kann.

In einer anderen bevorzugten Variante des Verfahrens ist die Raumachse, für die im Schritt b) die Bewegungsdaten ermittelt werden, die Hochachse der bewegten Landeplattform, wodurch eine Gierbewegung der Landeplattform neutralisiert werden kann.

In einer bevorzugten Weiterbildung des erfindungsgemäßen Verfahrens werden im Schritt b) auch translatorische Bewegungsdaten der Landeplattform in Richtung von zumindest einer der Raumachsen ermittelt und bei der Bestimmung des Zeitpunktes im Schritt c) berücksichtigt und diese translatorische Bewegungsdaten werden im Schritt d) in die Landesteuerungseinrichtung des Luftfahrzeugs übertragen und im Schritt e) bei der Steuerung des Luftfahrzeugs berücksichtigt. Hierdurch kann für den Landeanflug des Luftfahrzeugs zusätzlich zur Neutralisierung der Bewegungen der Landeplattform um die Raumachsen auch eine Bewegung der Landeplattform in Richtung einer oder mehrerer Raumachsen berücksichtigt und damit diese Bewegung neutralisiert werden.

Der die Vorrichtung betreffende Teil der Aufgabe wird durch die Vorrichtung mit den Merkmalen des Anspruchs 9 gelöst.

Die Vorrichtung zur automatischen Steuerung der Landung des Luftfahrzeugs auf der bewegten Landeplattform, steuert die Landung des Luftfahrzeugs nach einem erfindungsgemäßen Verfahren anhand von Positionsdaten des auf der Landeplattform vorgesehenen Landepunktes, von Bewegungsdaten der Landeplattform und/oder eines zuvor bestimmten Zeitpunktes, an dem der Landepunkt eine Referenzlage einnehmen wird.

Die Landesteuerung des Luftfahrzeugs kennt - wie bereits ausgeführt worden ist - einen oder mehrere in der Zukunft liegende Zeitpunkte, zu denen der Landepunkt auf der Landeplattform eine definierte Referenzlage einnehmen wird, und kennt auch die Koordinaten dieser Referenzlage(n) in einem absoluten Koordinatensystem. Diese Daten oder die zur Berechnung dieser Daten erforderlichen Informationen erhält die Landesteuerung per drahtloser Datenübertragung von der Landeplattform. Sie kennt weiterhin die aktuelle Position des Luftfahrzeugs im absoluten Koordinatensystem. Die Landesteuerung wählt daraufhin die Fluggeschwindigkeit über Grund und die Sinkgeschwindigkeit des Luftfahrzeugs so, dass der aus der aktuellen Position des Luftfahrzeugs, der Fluggeschwindigkeit über Grund und der Sinkgeschwindigkeit sowie der Höhe der definierten Referenzlage des Landepunktes berechnete Aufsetzpunkt zum berechneten Zeitpunkt dem Landepunkt entspricht.

Die Steuerung des Luftfahrzeugs kann vorzugsweise auch unter der Berücksichtigung einer vorgegebenen Referenzausrichtung der Landeplattform zum Referenzzeitpunkt, an dem der Landepunkt die Referenzlage einnehmen wird, erfolgen. Ist die Referenzausrichtung beispielsweise quer zur Anflugrichtung horizontal, so wird hierdurch erreicht, dass das Luftfahrzeug horizontal, also mit 0° Rollwinkel, landen kann.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigen:
- **Fig. 1**: eine schematische Darstellung der Rollbewegungen einer bewegten Landeplattform am Beispiel eines Flugzeugträgers;
- **Fig. 2A und 2B**: schematische Darstellungen der geometrischen Gesetzmäßigkeiten zur Beschreibung der Rollbewegung bei Schiffen; und
- **Fig. 3**: die schematische Darstellung eines Landeanflugs auf eine schwimmende Landeplattform.

### DARSTELLUNG VON BEVORZUGTEN AUSFÜHRUNGSBEISPIELEN

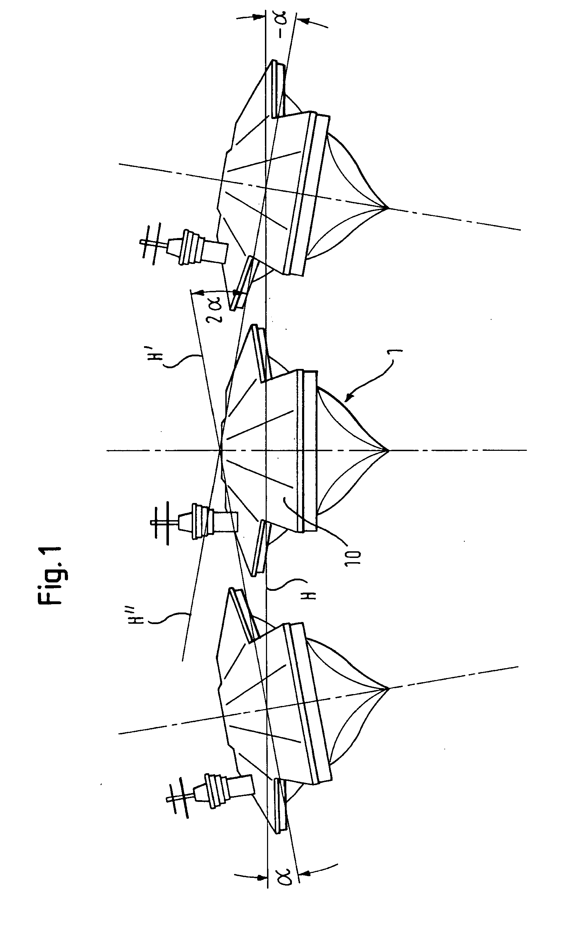

Fig. 1 zeigt drei Phasen der Rollbewegung eines Schiffs 1 als schwimmende Plattform am Beispiel eines Flugzeugträgers mit Blick auf den Bug des Flugzeugträgers. In der mittleren der drei Darstellungen befindet sich das Schiff 1 in der Neutralposition, das heißt, dass der Rollwinkel 0° beträgt und dass das Deck 10 des Schiffs 1, auf dem die Landebahn liegt, bezüglich der Rollachse entlang einer horizontalen Deckslinie H ausgerichtet ist.

In der linken Darstellung ist das Schiff um den Winkel □ in Fahrtrichtung gesehen im Uhrzeigersinn (in der Darstellung der Fig. 1, bei der von Vorne auf das Schiff gesehen wird, entgegen dem Uhrzeigersinn) gerollt, sodass sich die Steuerbordseite abgesenkt hat. Die Deckslinie H' verläuft jetzt in einem Neigungswinkel □ zur horizontalen Deckslinie H. In der rechten Darstellung ist das Schiff in Fahrtrichtung gesehen entgegen dem Uhrzeigersinn um den Winkel -□ gerollt, sodass sich dort die Backbordseite abgesenkt hat. Die Deckslinie H" verläuft jetzt unter dem Neigungswinkel.-□ zur horizontalen Deckslinie H. Der Gesamtbetrag der Rollbewegung des Schiffes beträgt somit 2□.

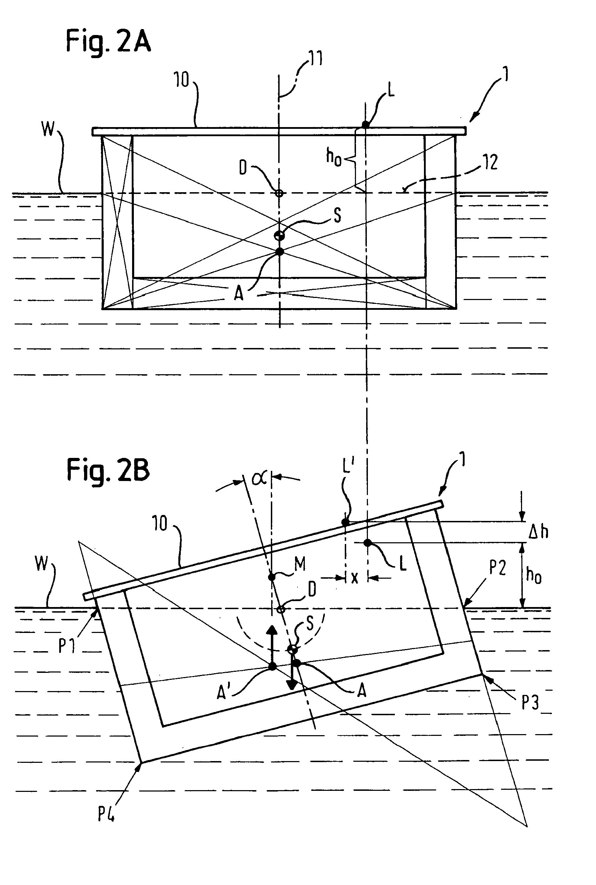

Fig. 2A und 2B zeigen die Rollbewegung des Schiffes 1 anhand eines geometrischen Modells. In Fig. 2A befindet sich das Schiff 1 in seiner Neutralposition, in der der Rollwinkel 0° beträgt und das Deck 10 des Schiffes horizontal ausgerichtet ist. Die Drehachse D, um die das Schiff rollt, liegt auf der Wasseroberfläche, im Beispiel der Fig. 2A somit auf dem Schnittpunkt der die Rollachse einschließenden senkrechten Mittelebene 11 des Schiffes mit der Linie 12 des Oberflächenniveaus des Wasserspiegels W. Der Schwerpunkt S des Schiffes und somit auch der Angriffspunkt A der Auftriebskraft befinden sich in der Neutralstellung der Fig. 2A ebenfalls in der Mittelebene 11 des Schiffes, sodass sich sowohl die am Punkt A angreifende Auftriebskraft, als auch die am Schwerpunkt S angreifende Gewichtskraft des Schiffes 1 in der Mittelebene 11 des Schiffes 1 befinden und somit aufheben. Das Schiff 1 liegt ruhig im Wasser, wobei davon ausgegangen wird, dass das Wasser unbewegt ist. Der Landepunkt L auf der auf dem Deck 10 vorgesehenen Landebahn liegt um den Betrag h₀ über der Wasserlinie.

Gerät nun das Schiff 1 in eine Rollbewegung, wie sie in Fig. 2B dargestellt ist, so verschiebt sich der Angriffspunkt der Auftriebskraft von dem auf der Mittelebene 11 des Schiffskörpers gelegenen Punkt A zum Punkt A', an welchem nun die Auftriebskraft angreift und ein aufrichtendes Drehmoment um das Metazentrum M erzeugt. Die geometrischen Zusammenhänge entsprechen in Analogie denen eines Stabpendels mit M als Aufhängepunkt.

In Fig. 2B ist zu erkennen, dass sich durch die Rollbewegung des Schiffes 1 um den Winkel □ nicht nur die winkelmäßige Ausrichtung des Decks 10 gegenüber der Neutrallage in Fig. 2A geändert hat, sondern dass auch der in Fig. 2A gezeigte gedachte Landepunkt L einer auf dem Deck 10 vorgesehenen Landebahn sich um den Betrag x zur Seite und um den Betrag □h nach oben bewegt hat.

Ein Luftfahrzeug, das auf der Landerbahn des Decks 10 landen will, muss somit seine Flugbahn ständig an die beim Rollen des Schiffes auftretende Aufwärts- und Abwärtsbewegung des Landepunktes und auch an dessen jeweilige seitliche Verschiebung anpassen und zudem seine Fluglage, das heißt den eigenen Rollwinkel, so anpassen, dass er beim Aufsetzen dem Rollwinkel des Schiffes entspricht. Ein derartiges Vorgehen, wenn es denn für einen Piloten überhaupt durchführbar ist, führt zu einem gefährlichen Schlingerkurs des Flugzeugs.

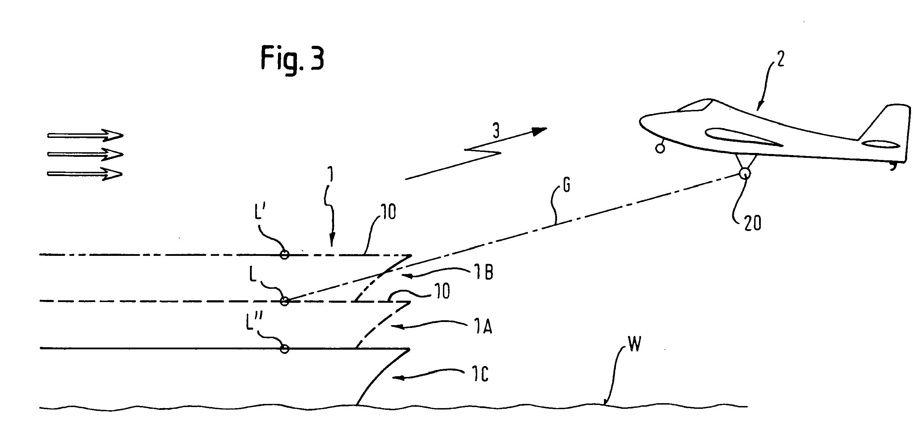

Fig. 3 zeigt schematisch den Gleitpfad G eines auf einem eine bewegte Plattform bildenden Schiffs 1, beispielsweise eines Flugzeugträgers, landenden Luftfahrzeugs 2. Das Schiff 1 schwimmt auf der Wasseroberfläche W und ist einer Rollbewegung, wie sie in Fig. 1 und Fig. 2B dargestellt ist, ausgesetzt. Die mittlere, gleichmäßig gestrichelte Darstellung 1A des Schiffs 1 zeigt das Schiff 1 in der in Fig. 2A dargestellten Neutrallage mit 0° Rollwinkel und horizontaler Ausrichtung des Decks 10 in Bezug auf die Rollachse. Die obere unregelmäßig gestrichelte Linie zeigt eine Darstellung 1B des Schiffes 1 unter Einwirkung eines Rollwinkels □ wobei die darin gezeigte Lage des Schiffes 1 der in Fig. 2B gezeigten Lage entspricht. Der Landepunkt L' auf dem Deck 10 des Schiffes 1 in der Lage 1B liegt oberhalb des Landepunkts L in der Neutrallage 1A des Schiffs 1. In durchgezogener Linie wird die Lage 1C des Schiffs 1 bei einem Rollwinkel von - □ dargestellt. Sie entspricht der in Fig. 1 rechts dargestellten Schiffslage. Der Landepunkt L" befindet sich in dieser Schiffslage 1C unterhalb des Landepunktes L der Neutrallage 1A des Schiffs 1.

Das anfliegende Luftfahrzeug 2 ist bestrebt, mit seinem Hauptfahrwerk 20 auf dem Landepunkt L des Schiffes 1 aufzusetzen. Da das Flugzeug bei der Landung in Richtung seiner Querachse horizontal ausgerichtet sein sollte (also keine Rollbewegung durchführen sollte), um maximalen Auftrieb zu besitzen und um eine optimale gleichzeitige Berührung der beiden seitlich voneinander beabstandeten Räder des Hauptfahrwerks mit der Oberfläche des Decks 10 des Schiffes 1 zu gewährleisten, sollte im Zeitpunkt des Aufsetzens auch das Deck 10 in Querrichtung zum Gleitpfad G des anfliegenden Luftfahrzeugs 2 horizontal ausgerichtet sein. Dies ist in der in Fig. 2A gezeigten Neutrallage des Schiffs 1, die der Schiffsdarstellung 1A in Fig. 3 entspricht, der Fall. Im Idealfall sollten daher sowohl das Schiff 1 als auch das landende Luftfahrzeug 2 einen Rollwinkel von 0° aufweisen.

Um dieses Ziel zumindest annähernd zu erreichen, werden die nachfolgend aufgeführten Schritte des erfindungsgemäßen Verfahrens durchgeführt. Zunächst wird das Schiff 1, also die bewegte und bewegbare Landeplattform, so um seine Hochachse gedreht, dass die auf dem Deck 10 vorgesehene Landebahn mit ihrer Landerichtung im Wind steht, was durch die Pfeile links in Fig. 3 symbolisiert ist. Hierdurch wird erreicht, dass das landende Luftfahrzeug 2 im Landeanflug keinen oder nur geringsten Seitenwindeinflüssen ausgesetzt ist.

An Bord des Schiffes 1 werden beispielsweise über ein Satellitennavigationssystem und/oder ein Trägheitsnavigationssystem die genauen Positionsdaten des Landepunktes L, L', L" auf dem Deck 10 des Schiffs 1 sowie die Bewegungsdaten der vom Schiff 1 durchgeführten Bewegung in Bezug auf ein ortsfestes (erdfestes) Koordinatensystem ermittelt. In der Folge wird zumindest ein bevorstehender Zeitpunkt berechnet, an welchem das Schiff 1 seine in Fig. 3 mit 1A bezeichnete Neutrallage einnimmt, der Landepunkt L somit in seiner Referenzlage bei 0° Rollwinkel sein wird und die Landeplattform folglich ihre Referenzausrichtung einnehmen wird, nämlich bezüglich des Anflugpfades G horizontal ausgerichtet ist. Dieser berechnete Zeitpunkt wird über eine schnelle Datenlinkverbindung, die durch den Pfeil 3 symbolisiert ist, vom Schiff 1 zum anfliegenden Luftfahrzeug 2 übertragen und dort in dessen Landesteuerungseinrichtung, beispielsweise in den Bordcomputer, eingespielt.

Im Luftfahrzeug ist nun die Referenzlage des Landepunktes L im absoluten, erdfesten Koordinatensystem bekannt und auch zumindest ein in der Zukunft gelegener Zeitpunkt, in dem der Landepunkt L diese Referenzlage einnehmen wird, ist dem Bordrechner des Luftfahrzeugs 2 bekannt. Wird davon ausgegangen, dass zu diesem Zeitpunkt auch die Referenzlage des Flugzeugträgers horizontal ist, kennt der Bordrechner auch diese Referenzlage. Ansonsten kann eine entsprechende Referenzlage, die das Schiff zu dem in der Zukunft gelegenen Zeitpunkt einnehmen wird, ebenfalls über die schnelle Datenlinkverbindung 3 vom Schiff an das Luftfahrzeug übertragen und dem dortigen Bordrechner zur Verfügung gestellt werden.

Da der Rechner der Landessteuerungseinrichtung des Luftfahrzeugs 2 nunmehr den Ort und den Zeitpunkt kennt, an dem das Luftfahrzeug 2 auf dem Deck 10 des Schiffs 1 aufsetzen soll, kann die Landessteuerungseinrichtung in Kenntnis der ebenfalls über ein Satellitennavigationssystem oder über ein Trägheitsnavigationssystem ermittelten aktuellen Position des Luftfahrzeugs 2 die aerodynamischen Steuerflächen sowie den Antrieb des Luftfahrzeugs 2 derart steuern, dass sich das Luftfahrzeug 2 auf dem Gleitpfad G bewegt und zum vorausberechneten Zeitpunkt auf dem Landepunkt L aufsetzt. Dazu erfolgt die Steuerung des Luftfahrzeugs derart, dass der von der Landessteuerungseinrichtung vorausberechnete Aufsetzort des Luftfahrzeugs auf dem Deck 10 des Schiffs 1 der Referenzlage des Landepunktes (0° Rollwinkel des Schiffes) entspricht und dass der von der Landessteuerungseinrichtung vorausberechnete Aufsetzzeitpunkt, das heißt der Zeitpunkt des Erreichens des Aufsetzortes, einem jener in der Zukunft gelegenen Zeitpunkte entspricht, an welchem der Landepunkt seine in Fig. 3 mit L bezeichnete Neutralposition einnimmt. Zu diesem Zeitpunkt wird das Luftfahrzeug zudem eine Fluglage einnehmen, die im Wesentlichen parallel zu der vorgegebenen Horizontalen oder zu der über die Datenlinkverbindung 3 vom Schiff 1 an das Luftfahrzeug 2 übermittelten Referenzlage der seitlichen Neigung des Decks 10 entspricht.

Auf diese Weise kann das Luftfahrzeug 2 ohne ständiges Nachkorrigieren der eigenen Fluglage im Wesentlichen unbeeinflusst von Seitenwind und auch unbeeinflusst von einer Rollbewegung des Schiffes 1 landen.

Selbstverständlich lässt sich auf diese Weise nicht nur die Rollbewegung des Schiffes 1 kompensieren, sondern auch eine Bewegung des Schiffes um seine Querachse (Stampfen) oder auch eine Bewegung des Schiffes um seine Hochachse (Gieren).

Fließen in die Bestimmung des bevorstehenden Zeitpunktes, an dem der Landepunkt L seine Referenzlage einnehmen wird, nicht nur die Bewegungen des Schiffes um seine drei Raumachsen, sondern auch Translationsbewegungen des Schiffes entlang seiner drei Raumachsen ein, so ist es möglich, das Luftfahrzeug 2 auch dann zuverlässig und sicher auf dem Schiff 1 zu landen, wenn dieses fährt oder einer Drift unterworfen ist. In diesem Fall werden auch die an Bord des Schiffes ermittelten Positionsdaten des Landepunktes zum bevorstehenden Landezeitpunkt sowie vorzugsweise auch die Bewegungsdaten des Schiffes beziehungsweise der Landeplattform entlang zumindest einer ihrer Raumachsen über die schnelle Datenlinkverbindung 3 an den Bordrechner und damit an die Landesteuerungseinrichtung des anfliegenden Luftfahrzeugs 2 übertragen. Die Berechnung des bevorstehenden Zeitpunkts, an dem der Landepunkt die Referenzlage (bei 0° Rollwinkel des Schiffes) einnehmen wird, und der absolute Ort des Landepunktes zu diesem Zeitpunkt in Bezug auf ein stationäres erdfestes Koordinatensystem oder auf das bewegte Koordinatensystem des Luftfahrzeugs 2 oder des Schiffes 1 können entweder an Bord des Luftfahrzeugs oder an Bord des Schiffes durchgeführt werden, wobei die Ergebnisse dann gegebenenfalls über die schnelle Datenlinkverbindung 3 zwischen dem Schiff 1 und dem Luftfahrzeug 2 übertragen werden können.

Die erfindungsgemäße Lösung des eingangs genannten Problems beruht somit darauf, dass der momentane Aufsetzpunkt des Luftfahrzeugs auf dem Schiff dem anfliegenden Luftfahrzeug jederzeit über eine Hochgeschwindigkeitsdatenverbindung bekannt gegeben werden kann. Aufgrund der dem Luftfahrzeug bekannten eigenen Geschwindigkeit über Grund, der eigenen Flughöhe sowie der dem Luftfahrzeug ebenfalls bekannten Entfernung zwischen dem Luftfahrzeug und dem Aufsetzpunkt, also dem Landepunkt L, auf dem Deck 10 des Schiffes 1 ist das Luftfahrzeug 2 jederzeit in der Lage, die erwartete Ankunftszeit (estimated time of arrival) und damit die genaue Position des eigenen Aufsetzpunktes vorauszuberechnen. Die Steuerung des Luftfahrzeugs wird dann durch Beeinflussung der Sink- und Fluggeschwindigkeit den Gleitpfad G des Landeanflugs so regeln, dass der vorausberechnete Aufsetzpunkt mit dem Landepunkt dann zusammenfällt, wenn dieser seine Referenzlage einnimmt, also wenn die Rollbewegung des Schiffes 1 im Nulldurchgang ist.

Durch den Abgleich der Windrichtungsangaben sowie des geographischen Höhenunterschiedes zwischen dem Luftfahrzeug 2 und dem Deck 10 des Schiffes 1 und die Bekanntgabe der Schiffslängsachse beziehungsweise der Ausrichtung der Landebahnachse relativ zur Schiffslängsachse über die Hochgeschwindigkeitsdatenverbindung 3 kann das Luftfahrzeug 2 wie auf einem Peilstrahl sicher auf dem Deck 10 des Schiffes landen.

Die für die Durchführung des erfindungsgemäßen Landeverfahrens erforderlichen Hardwarekomponenten sind in der Regel sowohl auf dem Schiff, als auch im Luftfahrzeug vorhanden, sodass unter Verwendung dieser Komponenten lediglich noch eine entsprechende Flugführungssoftware an Bord des Luftfahrzeugs und eine entsprechende Rolllageberechnungssoftware an Bord des Schiffes sowie eine entsprechende Hochgeschwindigkeits-Datenübertragungsverbindung zwischen dem Schiff und dem Luftfahrzeug, vorzugsweise eine Line-of-sight-Datenverbindung (direkte Sichtlinienverbindung zwischen dem Schiff und dem Luftfahrzeug) vorgesehen werden müssen. Sowohl auf dem Schiff 1, als auch im Luftfahrzeug 2 sind in der Regel hochgenaue Positionsbestimmungssysteme, beispielsweise Satellitennavigationssysteme, vorhanden. Des Weiteren ist zumindest auf dem Schiff 1 ein Trägheitsnavigationssystem zur exakten Messung der aktuellen Rolllage des Schiffes erforderlich; auch ein derartiges System gehört überlicherweise zur Ausstattung eines Schiffes, insbesondere eines Flugzeugträgers. Schließlich bedarf es noch einer automatischen Geschwindigkeitsregelung für die Sink- und Fluggeschwindigkeit an Bord des Luftfahrzeugs, um die erwartete Ankunftszeit am Landepunkt L exakt einhalten zu können. Auch ein derartiges Geschwindigkeitsregelungssystem ist im Allgemeinen an Bord von Luftfahrzeugen vorhanden. Somit kann mit verhältnismäßig geringem Aufwand die Präzision von Landungen von Luftfahrzeugen auf bewegten Plattformen, insbesondere Flugzeugträgern oder anderen geeigneten Schiffen, verbessert werden. Es kann hierdurch nicht nur die Landung automatisiert werden, sondern es wird zudem auch möglich, sichere Landungen für ferngesteuerte unbemannte Luftfahrzeuge auf derartigen Plattformen durchzuführen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Schiff
- 2: Luftfahrzeug
- 3: Datenlinkverbindung
- 10: Deck
- 11: Mittelebene
- 12: Linie
- 20: Hauptfahrwerk

- S: Schwerpunkt
- M: Metazentrum
- H: Decklinie
- G: Gleitpfad
- W: Wasseroberfläche
- L: Landepunkt
- L': Landepunkt
- L": Landepunkt

## Patentansprüche

1. Verfahren zum automatischen Landen eines Luftfahrzeugs, insbesondere eines unbemannten Luftfahrzeugs, auf einer bewegten, insbesondere schwimmenden, Landeplattform wie beispielsweise auf einem Flugzeugträger, wobei das Luftfahrzeug mit automatischen Navigationseinrichtungen und einer automatischen Landesteuerungseinrichtung versehen ist, mit den Schritten:
a) Ermitteln der Positionsdaten eines vorgesehen Landepunktes an Bord der bewegten Landeplattform;
b) Ermitteln von Bewegungsdaten einer Bewegung der Landeplattform um zumindest eine ihrer Raumachsen;
c) Bestimmung von zumindest einem bevorstehenden Zeitpunkt, an dem der Landepunkt eine Referenzlage und vorzugsweise die Landeplattform eine Referenzausrichtung einnehmen;
d) Übermittlung des im Schritt c) bestimmten Zeitpunkts sowie der Referenzlage des Landepunktes und/oder der in den Schritten a) und b) ermittelten Positions- und Bewegungsdaten und vorzugsweise auch der im Schritt c) bestimmten Referenzausrichtung an die Landesteuerungseinrichtung des Luftfahrzeugs;
e) Steuerung des Luftfahrzeugs derart, dass der von der Landesteuerungseinrichtung vorausberechnete Aufsetzort des Luftfahrzeugs auf der Landeplattform der Referenzlage des Landepunktes entspricht und dass der von der Landesteuerungseinrichtung vorausberechnete Aufsetzzeitpunkt, der dem Zeitpunkt des Erreichens des Aufsetzortes entspricht, dem im Schritt c) bestimmten Zeitpunkt entspricht.

2. Verfahren zum automatischen Landen eines Luftfahrzeugs nach Anspruch 1, wobei die bewegte Landeplattform bewegbar ist,
**dadurch gekennzeichnet,**
**dass** die Landeplattform vor der Landung des Luftfahrzeugs so ausgerichtet wird, dass die Längsachse der auf der Landeplattform vorgesehenen Landebahn in den Wind gedreht ist, so dass Seitenwindeinflüsse während der Landung minimiert sind.

3. Verfahren zum automatischen Landen eines Luftfahrzeugs nach Anspruch 2,
**dadurch gekennzeichnet,**
**dass** die Ausrichtung der Landeplattform während des Landeanflugs kontinuierlich erfolgt.

4. Verfahren zum automatischen Landen eines Luftfahrzeugs nach Anspruch 1, 2 oder 3,
**dadurch gekennzeichnet,**
**dass** die Referenzlage zumindest annähernd horizontal ist.

5. Verfahren zum automatischen Landen eines Luftfahrzeugs nach einem der vorhergehenden Ansprüche,
**dadurch gekennzeichnet,**
**dass** die Raumachse, für die im Schritt b) die Bewegungsdaten ermittelt werden, die Längsachse der bewegten Landeplattform ist.

6. Verfahren zum automatischen Landen eines Luftfahrzeugs nach einem der vorhergehenden Ansprüche,
**dadurch gekennzeichnet,**
**dass** die Raumachse, für die im Schritt b) die Bewegungsdaten ermittelt werden, die Querachse der bewegten Landeplattform ist.

7. Verfahren zum automatischen Landen eines Luftfahrzeugs nach einem der vorhergehenden Ansprüche,
**dadurch gekennzeichnet,**
**dass** die Raumachse, für die im Schritt b) die Bewegungsdaten ermittelt werden, die Hochachse der bewegten Landeplattform ist.

8. Verfahren zum automatischen Landen eines Luftfahrzeugs nach einem der vorhergehenden Ansprüche,
**dadurch gekennzeichnet,**
**dass** im Schritt b) auch translatorische Bewegungsdaten der Landeplattform in Richtung von zumindest einer der Raumachsen ermittelt und bei der Bestimmung des Zeitpunkts in Schritt c) berücksichtigt werden und
**dass** diese translatorischen Bewegungsdaten im Schritt d) an die Landesteuerungseinrichtung des Luftfahrzeugs übertragen und im Schritt e) bei der Steuerung des Luftfahrzeugs berücksichtigt werden.

9. Vorrichtung zur automatischen Steuerung der Landung eines Luftfahrzeugs auf einer bewegten Landeplattform, wobei die Vorrichtung anhand von Positionsdaten eines auf der Landeplattform vorgesehenen Landepunktes, von Bewegungsdaten der Landeplattform und/oder eines zuvor bestimmten Zeitpunktes, an dem der Landepunkt eine Referenzlage einnehmen wird, die Landung des Luftfahrzeugs nach einem Verfahren gemäß einem der vorhergehenden Ansprüche steuert.

10. Vorrichtung nach Anspruch 9,
**dadurch gekennzeichnet,**
**dass** die Steuerung des Luftfahrzeugs auch unter der Berücksichtigung einer vorgegebenen Referenzausrichtung der Landeplattform zum Referenzzeitpunkt, an dem der Landepunkt die Referenzlage einnehmen wird, erfolgt.
